# EUROPEAN PATENT SPECIFICATION

(11) **EP 4 110 226 B1**
(45) Date of publication and mention of the grant of the patent: **04.12.2024**
(21) Application number: 21712721.6
(22) Date of filing: 24.02.2021
(51) Int. Cl.: A61C 7/30, A61C 7/28, A61C 7/12, A61C 7/14

(54) **ORTHODONTIC SELF-LIGATING BRACKET**
SELBSTLIGIERENDE KLAMMER UND CLIP
SUPPORT ET PINCE À LIGATURE AUTOMATIQUE

(30) Priority: 28.02.2020 US 202016804382; 08.10.2020 EP 20200793
(43) Date of publication of application: 04.01.2023
(73) Proprietor: Hirsch Dynamics Holding AG, 8832 Wollerau (CH)
(72) Inventor: HIRSCH, Markus, 8832 Wollerau (CH)
(74) Representative: Torggler & Hofmann Patentanwälte - Innsbruck
(86) International application number: PCT/EP2021/054521
(87) International publication number: WO 2021/170629

(56) References cited:
- EP-B1- 3 419 553

## Description

The present invention relates to a ligating clip for a self-ligating orthodontic bracket, with the features of the preamble of claim 1 and a self-ligating orthodontic bracket having at least one such ligating clip.

A ligating clip with the features of the preamble of claim 1 and a self-ligating orthodontic bracket having such a clip is shown in EP 3 419 553 B1.

The ligating clip, made of superelastic material, is approximately U-shaped with a labial arm, a lingual arm and a connecting arm connecting the labial arm and the lingual arm and has three fingers (which, in the present disclosure, are also called protrusions or protruding elements) on a free end of its labial arm.

A locking element in form of a hook is provided at a free end of the lingual arm, the hook protruding in a lingual-labial direction. The hook is manufactured by stamping with bending down or up the free end of the lingual arm such that the hook has three cut sides (two of them running in a gingival-occlusal direction and one of them running in a mesial-distal direction) and is connected to the material of the lingual arm by a single side (running in a mesial-distal direction). Due to the stamping, the hook extends generally in a lingual-labial direction. The hole produced as a consequence of the stamping is completely surrounded by material of the lingual arm (in other words, it is not open at any side of the lingual arm). In a view along the lingual-labial direction, the hook is only minimally distanced from the three sides.

In an inserted state in which the ligating clip is inserted in a self-ligating bracket, the lingual arm runs through an occlusal-gingival channel which has two sections of different clearance and separated from each other by a step. The section at the occlusal side has a higher clearance and allows the hook to slide freely and the other section has a lower clearance to stop the hook in a position in which the archwire slot is open such that an archwire can be inserted into or removed from the archwire slot. In this way, a loss of the clip in the open position can be avoided. In the closed position the clip is locked by its elastic force only, not by a dedicated locking element.

During use the archwire will apply varying forces on the ligating clip.

A different concept of a ligating clip in which cutouts are used to provide locking elements in a closed position of the clip is shown in US 9,345,558 B2 and US 10,555,793 B2.

Self-ligating orthodontic brackets were developed to eliminate the need to secure the arch wire to the bracket with external ligation, usually either elastic or metal- wire ties. These brackets have a slot to receive the arch wire, and a clip is then snapped into place over the slot to keep the arch wire attached.

U.S. Patent 3,772,787 to Hanson discloses an early design of a passive self-ligating bracket based on a flexible clip. The disclosed orthodontic bracket comprises a body slotted for the reception of an arch wire and a U-shaped clip for retaining the arch wire in the slot. The clip is designed of flat metal conforming to the shape of the body and is movable between two positions in which the labial opening is respectively open and closed. A big drawback of this original design is there is nothing to secure the free end of the clip's labial side and therefore the arch wire can easily be displaced from the arch wire slot.

U.S. Patent 4,492,573 to Hanson improved upon the original design with an active self-ligating bracket by 1) adding a mesial-distal retainer slot to the gingival side of the arch wire slot, 2) bending the free end of the retainer member's labial side so that it can be inserted into the retainer slot of the arch wire slot and 3) forming a saddle ridge at the labial side of the body. The first two modifications help to hold the free end of the clip's labial side at a closed position and prevent the clip from moving beyond its elastic limit when subjected to a force in the labial direction. The third secures the clip's labial side at the open position. However, there is still insufficient restraint on the free end of the clip's labial side when it is subjected to a force in the mesial-distal direction.

U.S. Patent 5,586,882 to Hanson documented the use of a Ni-Ti based shape-memory alloy as the clip material. The disclosed self-ligating orthodontic bracket comprises a U-shape spring clip with converging arms, movable on the bracket body between slot open and closed positions; in the latter position the spring retains an arch wire in the slot and urges the bracket and wire to their optimum relative positions. The clip is of a superelastic shape recovery metal alloy, preferably of thickness from 0.20 mm (0.008 in) to 0.25 mm (0.010 in), with rounded edges.

The original design by Hanson did not have a restraint to prevent the clip moving in the mesial-distal direction. U.S. Patent 5,906,486 to Hanson added a cut-out in the gingival side of the arch wire slot wall to retain the clip and prevent it from moving in the mesial-distal direction. The free end part of the labial arm portion extends into the recess to protect the spring member against excessive movement in the labial direction. Brackets based on the design concepts disclosed in the above patents have been marketed by Speed System and still available today. Only metal brackets have been produced and no aesthetic version is available by Speed System.

A hybrid between a conventional twin bracket and a flexible clip active self-ligating bracket, known as the In-Ovation bracket, was developed by Voudouris in 1997 and is described in US Patent No. 5,857,850. An improved design has been available since 2002, marketed as In-Ovation R (See US Patent No. 6,368,105 and US 6,776,613). An important feature of the design is a slot blocker to prevent the clip's movement in the mesial-distal direction. An aesthetic version of this system (In-Ovation C) was introduced in 2007 in the form of a ceramic bracket, in which the metal clip has been plated with Rh so that it is matte in appearance and thus does not reflect light as much as a polished surface would. The clip is made of a Co-Cr-Mo alloy and tends to lose its modulus after use during treatment. However, the coating tends to wear off in the early stage of treatment and lose its aesthetics.

US Patent Application No. 9,770,310 to Hirsch discloses a bracket that has a wall portion extending upward along one side of the arch wire slot. This wall portion has three indentations in a line parallel to the mesiodistal direction. There is a channel running entirely through the bracket element underneath the arch wire slot and in a gingival-occlusal direction of the bracket. The clip is substantially U-shaped and has a first end with three parallel protrusions (which, in this disclosure, are also called fingers) shaped to fit within the three indentations of the wall portion, and a second end having a locking element. The clip is securable to the bracket by placing the second end through the channel and engaging the locking element onto the bracket element and placing the protrusions into the indentations of the bracket element. The protrusions are held in the indentations by friction due to the downward spring force of the clip on the floor of the indentation. The clip is releasable by sliding the protrusions out of the indentations to expose the arch wire slot. While this device is suitable for most purposes, it would be desirable to improve upon this construction and provide a clip that has an even more secure fit to the bracket, to avoid any inadvertent release during use.

It is an object of the invention to develop a ligating clip and a self-ligating orthodontic bracket that are easy to fabricate, easy to assemble and securely fastened. It is another object of the invention to develop a self-ligating orthodontic bracket that is easy to use, even more securely fastened and aesthetically pleasing.

This object is accomplished by a clip for a self-ligating orthodontic bracket having the features of claim 1 and a self-ligating orthodontic bracket having at least one such ligating clip and/or an orthodontic bracket having the features of claim 12. Preferred embodiments of the invention are defined in the dependent claims.

Embodiments of the invention refer to an orthodontic bracket comprising a base configured for attachment to a tooth surface, a bracket element with an arch wire slot attached to one side of the base, and a clip for securing the arch wire in the slot. The arch wire slot is formed in the labial side of the bracket element and runs along a mesiodistal direction of the bracket element.

In some embodiments, the bracket element has a wall portion extending upward along one side of the arch wire slot. This wall portion has three indentations in a line parallel to the mesiodistal direction. These indentations are bounded on the interior side by two side walls that separate the three indentations. Each of the side walls has a free end on which outwardly extending flanges are formed. Each flange extends toward the respective indentation parallel to the mesiodistal direction and forms a stop surface for the clip elements. There is a channel running entirely through the bracket element underneath the arch wire slot and in a gingival-occlusal direction of the bracket.

In some embodiments, the clip is substantially U-shaped and has a first end with two protruding elements shaped to fit within the outer indentations of the wall portion, and a central element comprising two diverging fingers, that fits within the central indentation. The outer protruding elements have ends that extend inwardly toward the central elements and which are held in place behind the flanges on the side walls. The fingers diverge outwardly and are also held in place behind the flanges on the side walls.

In some embodiments, a second end of the U-shaped clip has a locking element that engages the underside of the bracket. This second end is curved in the shape of a J, with the short end of the J being bent downward to engage a stop surface in the channel. The clip is securable to the bracket by placing the second end through the channel until the downwardly bent section passes the stop surface, and placing the three protruding clip elements into the indentations of the bracket. The outer protrusions are held in the indentations by friction due to the downward spring force of the clip on the floor of the indentations, as well as by the flanges acting as a stop surface against the protrusions of the outer elements, which engage a rear surface of the flanges as rearward pressure is applied to the clip to remove it from the bracket. The fingers of the central element engage the flanges that extend toward the central indentation, to further lock the clip into the bracket.

In some embodiments, the clip is releasable by sliding the protrusions and central element out of the indentations to expose the arch wire slot. This sliding motion can require additional force, to allow the fingers and the protrusions to bend enough to clear the flanges.

The combination of the two protrusions, central element and three indentations with the locking flanges secures the clip firmly when it is subjected to force in the mesial-distal direction as well as the gingival-occlusal direction, and provides an even distribution of forces on the arch wire during the active ligation stage.

In the present disclosure a coordinate system is used which is attached to a labial tooth surface on the mandible. This is not to be understood in a limiting way. The invention can be practiced irrespective of the position of the tooth and irrespective of the tooth surface. By way of example, a ligating clip and a self-ligating orthodontic bracket according to the invention could also be used with a labial or lingual surface of a tooth of the maxilla.

A ligating clip and a self-ligating orthodontic bracket according to the invention will have the following pairs of direction:
- lingual-labial
- mesial-distal
- gingival-occlusal

In the present disclosure the term "connected to" is not to be construed as implying that the objects connected to each other would have to be separate physical parts. By way of example, with respect to the ligating clip, although it is stated that the labial arm and the lingual arm are connected to the connecting arm it is possible - even preferred - that the ligating clip is made of a single physical part.

The ligating clip is made of superelastic material and is approximately U-shaped with a labial arm, a lingual arm and a connecting arm connecting the labial arm and the lingual arm and has one, two or three fingers on a free end of its labial arm.

A locking element in form of a hook is provided at a free end of the lingual arm, the hook protruding in a lingual-labial direction. In an inserted state in which the ligating clip is inserted in a self-ligating bracket, the lingual arm runs through an occlusal-gingival channel which has two sections of different clearance and which are separated from each other by a step. The section at the occlusal side has a higher clearance and allows the hook to slide freely and the other section has a lower clearance to stop the hook in a position in which the archwire slot is open such that an archwire can be inserted into or removed from the archwire slot. In this way, a loss of the clip in the open position can be avoided. In the closed position the clip is locked by its elastic force only, not by a dedicated locking element, namely, the fingers are held in the cavities of the occlusal wall of the bracket by friction due to the downward spring force of the clip on the floor of the cavities. Of course, during insertion of the clip, in the gingival section the hook is pressed into the plane of the lingual arm which is possible due to the elasticity of the hook. Once the section having higher clearance is reached, the hook is released back into its state protruding from the plane of the lingual arm.

Due to the cutout the clip is better suited to endure the forces acted upon by the archwire because the cutout increases the elasticity of the clip resulting in a securely fastened clip. Due to the increased elasticity assembly of the clip and the bracket is easier because a hook having a smaller width can be used. The cutout and the hook can easily be produced by stamping with bending down or up.

In some embodiments of the clip the at least one cutout has at least one mesial-distal border and at least one gingival-occlusal border.

In some embodiments of the clip the hook, in a view along the lingual-labial direction, has a length and is distanced from at least one mesial-distal border and from at least one gingival-occlusal border by at least half of its length.

In some embodiments of the clip the at least one cutout, in a view along the lingual-labial direction, is generally L-shaped. With respect to these embodiments it can be provided that a shape of the lingual arm due to the cutout is given by a gingival section, a protrusion connected to the gingival section, the protrusion running in the gingival-occlusal direction and having a smaller width along the mesial-distal direction than the gingival section, and, preferably, a transversal part running in the mesial-distal direction, the transversal part being connected on one end to the protrusion and on a further end to the hook.

In some embodiments of the clip the labial arm is provided with a mesial finger and a distal finger, only. Alternatively, a single finger or an additional (mesial) finger could be provided.

In some embodiments, the clip can be slid open and closed with the aid of an aperture for a tool.

In some embodiments, the clip is provided with only one cutout such that, in a view along the lingual-labial direction, the clip is of asymmetric design due to the presence of the cutout.

Preferably, the clip is made of superelastic material, e.g., a Ni-Ti alloy.

In some embodiments, the hook protrudes from a lingual surface of the lingual arm. Alternatively, it could be provided that the hook protrudes from a labial surface of the lingual arm (of course, the position of the step in the occlusal-gingival channel has to be adapted accordingly).

Preferably, the clip can be provided with a coating minimizing the amount of Ni leaching from the clip (in case a Ni-Ti alloy is used) and/or improving the aesthetics of the clip.

In some embodiments of the bracket it is provided with an occlusal-gingival channel which has two sections of different clearance and which are separated from each other by a step such that, in a position in which the archwire slot is open, the hook acts together with step to prevent a separation of the clip from the bracket.

Preferably, the bracket is made of ceramics, metals, or polymeric materials.

Optional tie-wings of the bracket can be used to apply bands
With the exception of the provision of a cutout as described in this document, the clip and the bracket can have the features described in EP 3 419 553 B1.

In one embodiment, the clip is made of a Ni-Ti alloy. This alloy exhibits superelasticity, which keeps the elastic modulus of the clip substantially unchanged even with extended use. The clip can also be coated with a coating such Au/Rh, Pt/Rh and Pd/Rh, with Rh being an outermost layer. This coating minimizes the amount of Ni that leaches from the clip, and improves the aesthetics of the bracket when used in conjunction with a ceramic bracket body.

In a preferred embodiment, the arch wire slot is chamfered on its edges to minimize friction when inserting and removing the arch wire from the slot.

Preferably the base is manufactured by embossing protrusions into the base, by stamping the base immediately after molding. This forms undercuts around the protrusions, which enhances the adhesion of the base to the tooth surface.

In the drawings, the figures show:
- Fig. 1: a ligating clip in isometric view
- Fig. 2a-c: the clip of Fig. 1 in a view along a lingual-labial direction, a gingival-occlusal direction and a mesial-distal direction, respectively
- Fig. 3a,b: a self-ligating bracket having a clip according to Fig. 1 and 2 in two different isometric views
- Fig. 4a,b: the bracket of Fig. 3 in a view along a gingival-occlusal direction with and without inserted clip, respectively
- Fig. 5: the bracket of Fig. 4b in an isometric view
- Fig. 6: a cut view of the bracket of Fig. 4a
- Fig. 7: an alternative embodiment of a ligating clip in a view along a lingual-labial direction
- Fig. 8: a top view of a bracket according to another embodiment of the invention
- Fig. 9: a side view of the bracket of Fig. 8
- Fig. 10: a top view of the clip for use with the bracket of Fig. 8
- Fig. 11: a perspective view of the clip shown in Fig. 10
- Fig. 12: a cross-sectional view along line V-V of Fig. 11
- Fig. 13: a cross-sectional view along line VI-VI of Fig. 8 and
- Fig. 14: a bottom view of the bracket of Fig. 8

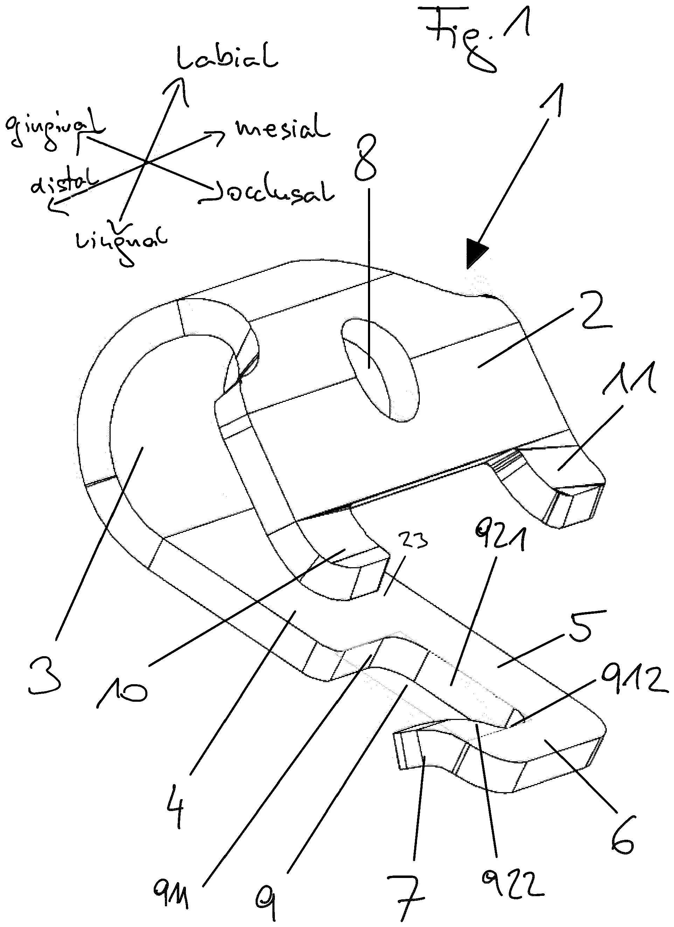

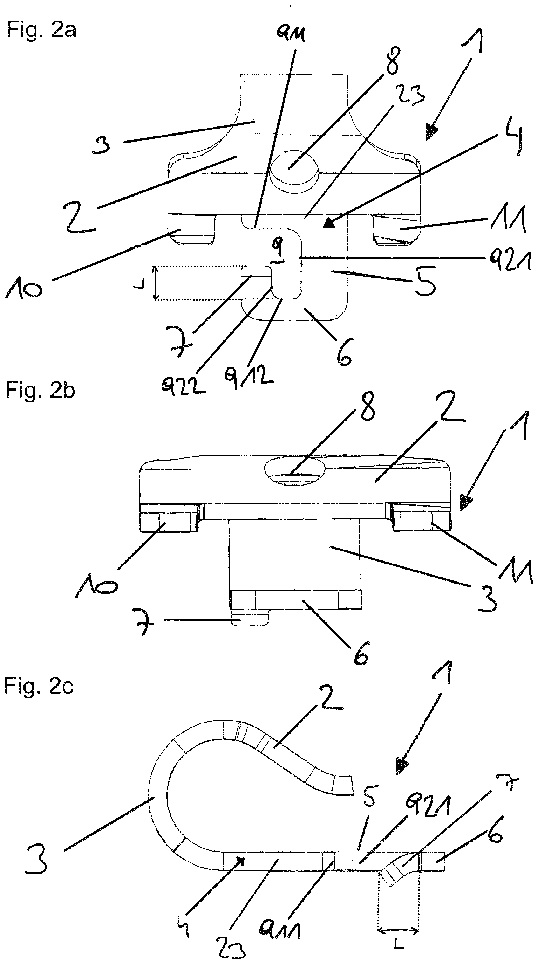

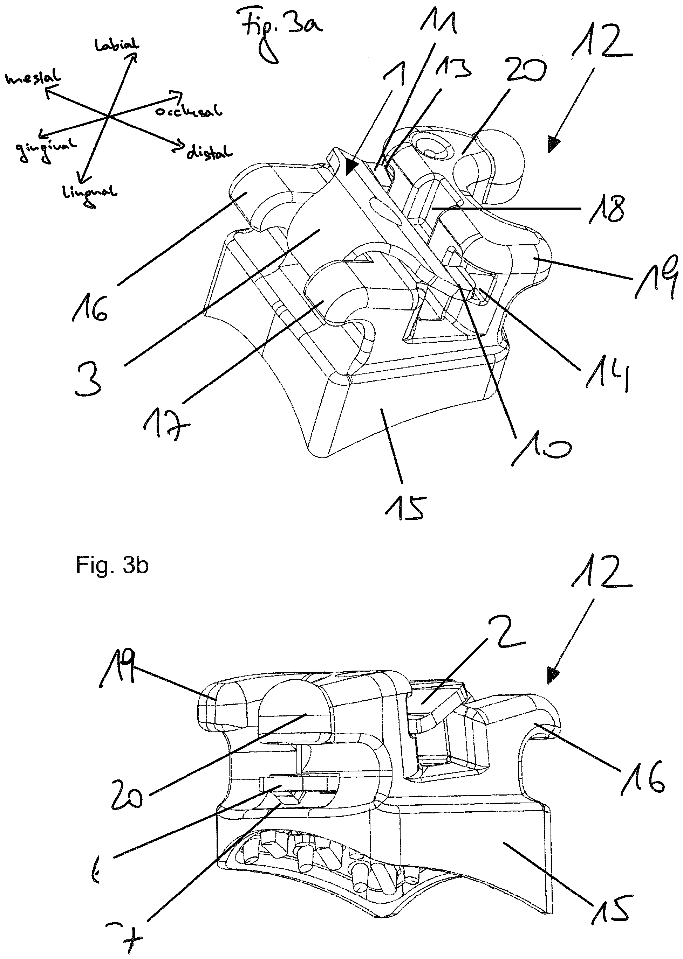

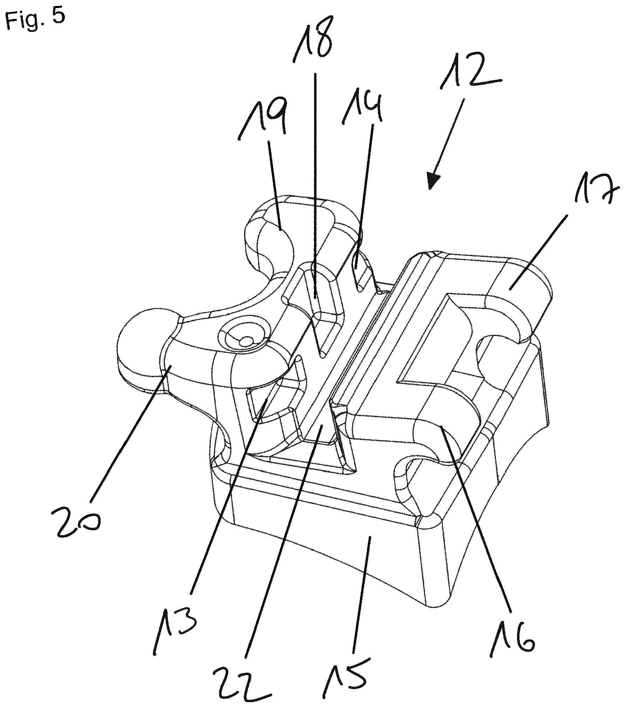

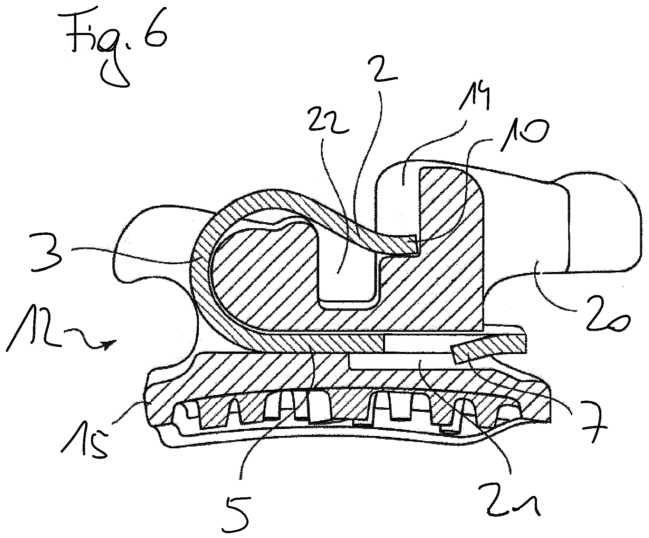

Fig. 1 and 2 show a first embodiment of a ligating clip 1 for a self-ligating orthodontic bracket 12 shown in Fig. 3 to 6, the clip 1 comprising:
- a labial arm 2 having a free end and a further end
- a lingual arm 4 having a free end and a further end
- a connecting arm 3 connected to the further ends of the labial arm 2 and the lingual arm 4
   the labial arm 2, the connecting arm 3 and the lingual arm 4 each having a distal side and a mesial side, the labial arm 2 and the lingual arm 4 extending generally in a gingival-occlusal direction and the connecting arm 3 extending generally in a lingual-labial direction
- a locking element in form of a hook 7 arranged at the free end of the lingual arm 4, the hook 7 protruding in a lingual-labial direction
- at least one cutout 9 arranged at the free end of the lingual arm 4, the at least one cutout 9 being open at either the distal or the mesial side of the lingual arm 4

It can be seen, that the at least one cutout 9 has two mesial-distal borders 911, 912 and two gingival-occlusal borders 921, 922.

The hook 7, in a view along the lingual-labial direction, has a length L and is distanced from the mesial-distal borders 911, 912 and from the gingival-occlusal borders 921, 922 by at least half of its length L.

The at least one cutout 9, in a view along the lingual-labial direction, is generally L-shaped and a shape of the lingual arm 4 due to the cutout 9 is given by a gingival section 23, a protrusion 5 connected to the gingival section 23, the protrusion 5 running in the gingival-occlusal direction and having a smaller width along the mesial-distal direction than the gingival section 23, and a transversal part 6 running in the mesial-distal direction, the transversal part 6 being connected on one end to the protrusion 5 and on a further end to the hook 7.

In the embodiment of Fig. 1 to 6 the clip 1 is provided with only one cutout 9 such that, in a view along the lingual-labial direction, the clip 1 is of asymmetric design due to the presence of the cutout 9.

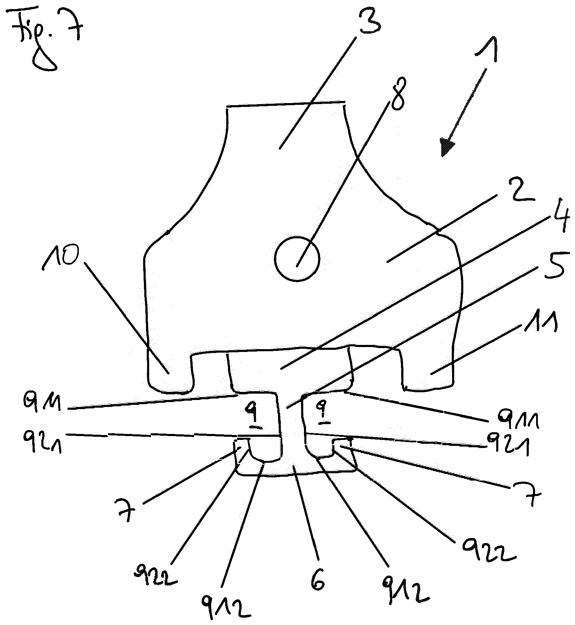

In the alternative embodiment of a clip 1 shown in Fig. 7, two cutouts 9 are provided wherein each cutout 9 and hook 7 is designed as shown in the embodiment of Fig. 1 and 2. The clip 1 of this embodiment is of a symmetric design.

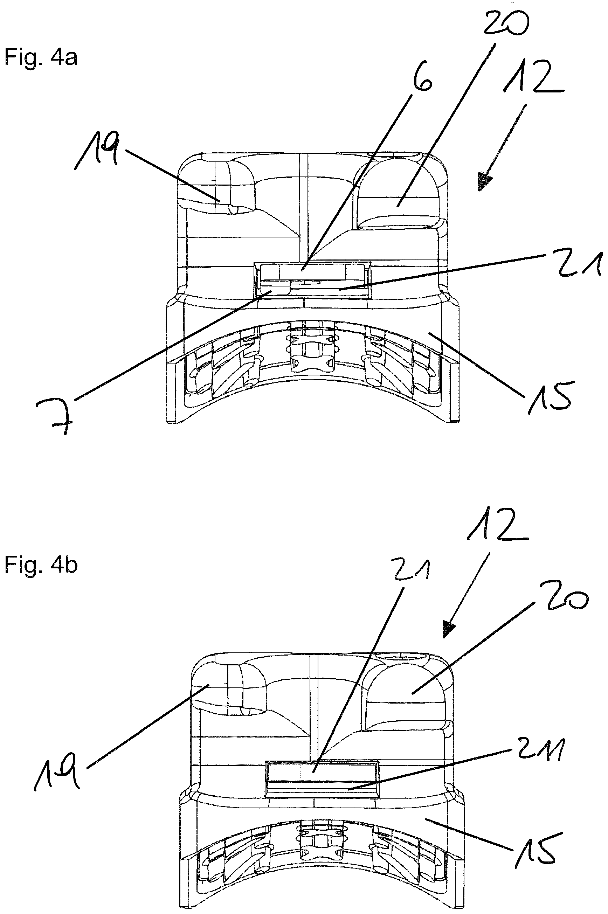

The bracket 12 is provided with an occlusal-gingival channel 21 which has two sections of different clearance and which are separated from each other by a step 211 (cf. Fig. 4b) such that, in a position in which the archwire slot 22 is open, the hook 7 acts together with step 211 to prevent a separation of the clip 1 from the bracket 12.

A base 15 of the bracket 12 can be bonded to a tooth enamel by applying adhesives between the base 15 and the enamel as is well known in the art.

The bracket 12 has an archwire slot 22 to accept an archwire (not shown).

An occlusal wall of the bracket 12 is provided with a mesial cavity 13 and a distal cavity 14 to cooperate with the fingers 10, 11. Another (medial) cavity 18 is not used in this embodiment but could be used together with a clip 1 having three fingers. Alternatively, it could be provided that the medial cavity 18 is not present.

The clip 1 can be slid open and closed with the aid of an aperture 8 for a tool.

Preferably, the clip 1 is made of superelastic material, e.g, a Ni-Ti alloy.

Preferably, the clip 1 can be provided with a coating minimizing the amount of Ni leaching from the clip (in case a Ni-Ti alloy is used) and/or improving the aesthetics of the clip 1.

Preferably, the bracket 12 is made of ceramics, metals, or polymeric materials.

Optional tie-wings 16, 17, 19, 20 can be used to apply bands.

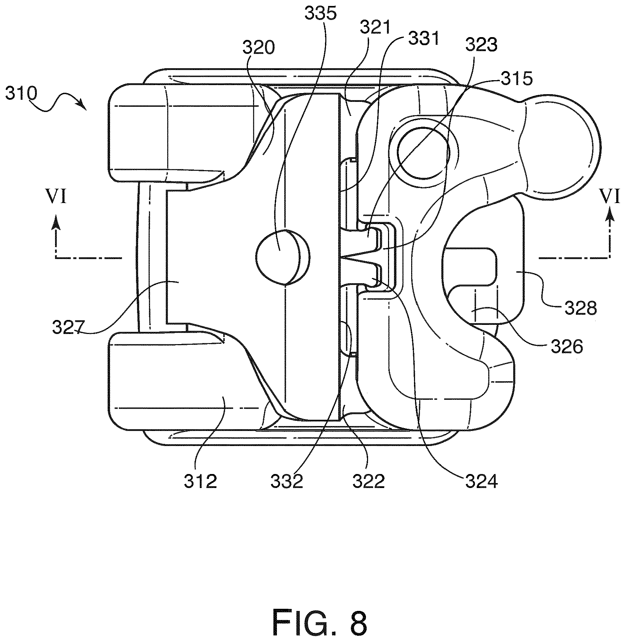

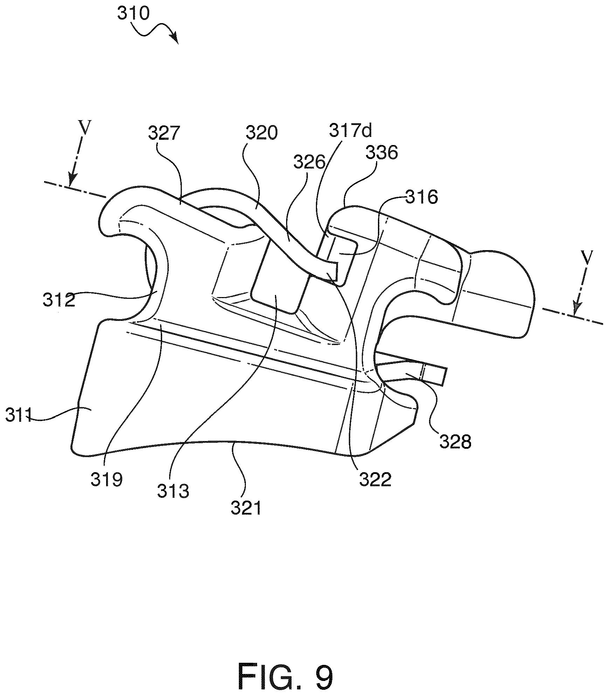

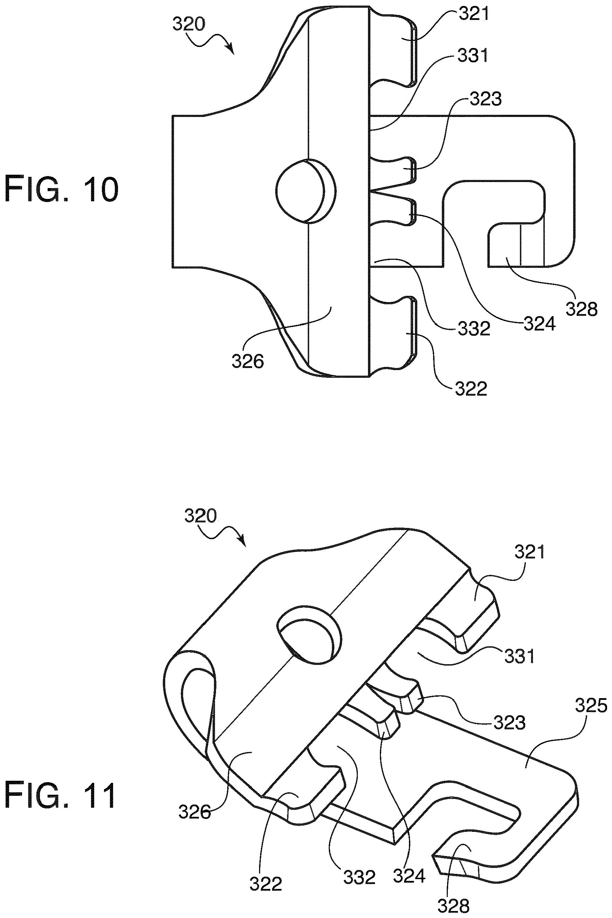

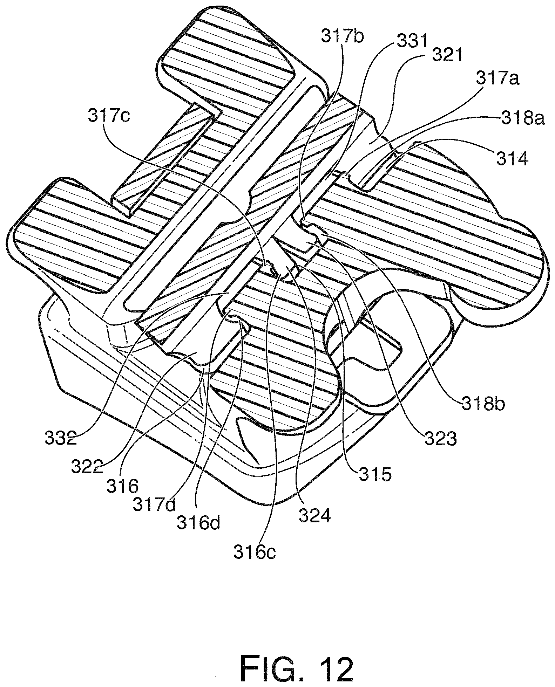

Fig. 8 and 9 show a self-ligating orthodontic bracket 310 comprising a base 311 and a bracket element 312, as well as a U- shaped ligating clip 320, shown in detail in Figs. 10 and 11. Bracket element 312 has a mesial-distal slot 313 to accept an arch wire. Three cavities 314, 315, 316 are made at the gingival wall 317 of slot 313 (see Fig. 12). Clip 320 has a first end with two protrusions 321, 322, and a central element comprising central fingers 323, 324, which engage indentations 314, 315, 316 when the clip 320 is in the closed position. These protrusions and fingers in combination with the indentations secures the clip firmly when it is subjected to force in the mesial-distal direction, providing an even distribution of forces on the arch wire during the active ligation stage.

The clip 320 is made of a superelastic material. The bracket element and base can be made of ceramics, metals, or polymeric materials.

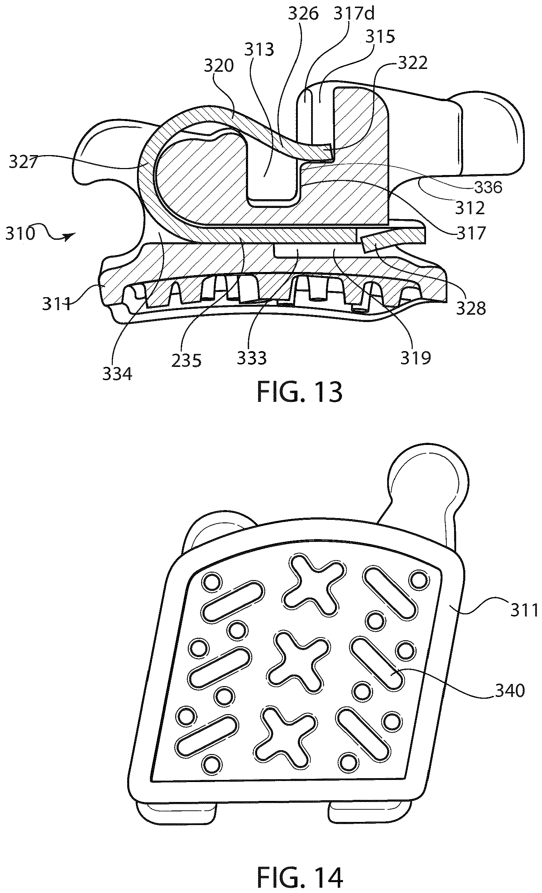

Lingual side 325 of clip 320 is inserted into a gingival-occlusal channel 319 of bracket element 312, as shown in Fig. 13, and the labial side 326 is used for locking and unlocking the arch wire slot 313. The two sides are connected by a bend 327 at the occlusal side. The lingual side 325 and the bend 327 are narrower than the width of the channel 319, so that the clip 320 can be easily inserted.

At the labial side 326, the clip 320 expands to cover the full length of the arch wire slot towards its gingival end. As shown in Figs. 10 and 11, two cut-outs 331, 332 are made at free gingival end of the clip to form the two parallel protrusions 321, 322, and central fingers 323, 324. Central fingers 323, 324 are angled outwardly toward a respective adjacent protrusion, so that the ends of each finger 323, 324 and protrusion 321, 322 abut the adjacent side wall 318a, 318b, 318c, 318d of the bracket. The sides walls 318a-318d each have distal ends with flanges 317a-317d that protrude parallel to the mesial-distal direction, and act as stop surfaces for protrusions 321, 322 and central fingers 323, 324 when they are inserted into the indentations 314, 315, 316 and are locked in place behind flanges 317a-317d, as shown in Fig. 12. The protrusions 321, 322 and fingers 323, 324 are angled so that they extend substantially parallel to the lingual side 325 of the clip 320, and exert a downward pressure on the surface of the bracket with the indentations, to add extra resistance to movement when in the locked position.

Clip 320 can be slid open and closed with the aid of an aperture 335 disposed behind protrusions 321, 322 and fingers 323, 324. A user can slide clip 320 open and closed by inserting a tool through aperture 335 and moving the tool back and forth.

Due to the interaction of the ends of protrusions 321, 322 and fingers 323, 324 with the flanges 317a-317d, the user must exert sufficient force to bend the protrusions and fingers so that they clear flanges 317a-317d to release clip 320 from bracket element 312.

As shown in Figs. 10-12, the lingual side 325 of the clip is in the shape of a J, having a hooked end with a tip 328. Tip 328 is bent in the lingual direction to serve as a locking tab so that clip 320 will not separate from the bracket element 312 after being inserted into the channel 319. Channel 319, as shown in Fig. 13, has two stepped sections: the section 333 at the gingival side has a higher clearance to allow the tip 328 to slide freely and the other section 334 with a lower clearance, forming a stop surface, to stop the tip 328. The location of the stepped divide between the two sections is determined so as to minimize the length of the lingual side portion of the clip and not extend far beyond the bracket base boundary.

The base 311 is bonded to the tooth enamel by applying adhesives between the base and enamel. A structured bottom surface of the base 311 can be formed such as shown in Fig. 12. No adhesion promoter is applied on the surface of the base 311 to enhance bonding chemically, and the bonding to the base is completely mechanical by anchoring solidified adhesives at undercuts on the base, formed either by embossed protrusions or particles glued to the base. As shown in Fig. 12, protrusions 340 are embossed over the surface of the base 311. Undercuts can be formed by stamping the protrusions 340 right after the molding process, simplifying the manufacture process and lowering its cost.

In a preferred embodiment, the clip 320 is made of Ni-Ti alloy. Due to the superelastic property of the alloy, the elastic modulus of the clip remains unchanged even after extended use in oral cavity. This is a big advantage compared with other spring materials such as Co-Cr-Mo alloys. In addition, the clip can be coated with dual layers of Au/Rh, Pt/Rh or Pd/Rh, all with Rh in the outermost layer. Preferably, the thickness of the Rh is between 0.5 µm and 3 µm to maintain the integrity of the coating during long exposure in oral cavity. This coating can minimize Ni from leaching and improve the esthetics when used along with a ceramic bracket body.

In another preferred embodiment, the bracket body is manufactured by injection molding. The molded green bodies are converted to transparent ceramics through binder burnout, sintering and/or hot isostatic pressing. The materials can be high-purity alumina, zirconia or other compounds that can be densified to full density and high translucency, such as sialon or spinel. Preferably, the body is polished chemically to produce a fine surface finish. The smoothly polished surface, combined with a chamfer 336 at the edge of the arch wire slot (Fig. 9), make friction of arch wire over the slot extremely small. The frictional force can be comparable to or even smaller than that over a polished metallic bracket.

In a further embodiment, the bracket body can be manufactured by 3D printing, in particular using a DLP (digital light processing) or SLA (stereolithography) printer.

### List of reference signs:

- 1: ligating clip for a self-ligating orthodontic bracket
- 2: labial arm of clip
- 3: connecting arm of clip
- 4: lingual arm of clip
- 5: protrusion of lingual arm of clip
- 6: transversal part of lingual arm of clip
- 7: hook
- 8: aperture for tool
- 9: cutout
911 first mesial-distal border of cutout
912 second mesial-distal border of cutout
921 first gingival-occlusal border of cutout
922 second gingival-occlusal border of cutout
- 10: distal finger of clip
- 11: mesial finger of clip
- 12: self-ligating orthodontic bracket
- 13: mesial cavity in occlusal wall of bracket
- 14: distal cavity in occlusal wall of bracket
- 15: base of bracket
- 16: first gingival tie-wing
- 17: second gingival tie-wing
- 18: medial cavity in occlusal wall of bracket
- 19: first occlusal tie-wing
- 20: second occlusal tie-wing
- 21: occlusal-gingival channel
211 step in occlusal-gingival channel
- 22: archwire slot
- 23: gingival section of lingual arm
- 310: orthodontic bracket
- 311: base
- 312: bracket element
- 313: mesial-distal slot
- 314: cavity
- 315: cavity
- 316: cavity
- 317: gingival wall
- 317a: flange
- 317b: flange
- 317c: flange
- 317d: flange
- 318a: adjacent side wall of the bracket
- 318b: adjacent side wall of the bracket
- 318c: adjacent side wall of the bracket
- 318d: adjacent side wall of the bracket
- 319: channel
- 320: clip
- 321: protrusion
- 322: produsion
- 323: finger
- 324: finger
- 325: lingual side
- 327: bend
- 328: tip
- 331: cutout
- 332: cutout
- 333: section
- 334: section
- 335: aperture
- 336: chamfer
- 340: protrusion
- L: length of hook in a view along the lingual-labial direction

## Claims

1. A ligating clip (1) for a self-ligating orthodontic bracket (12), comprising:
- a labial arm (2) having a free end and a further end
- a lingual arm (4) having a free end and a further end
- a connecting arm (3) connected to the further ends of the labial arm (2) and the lingual arm (4)
the labial arm (2), the connecting arm (3) and the lingual arm (4) each having a distal side and a mesial side, the labial arm (2) and the lingual arm (4) extending generally in a gingival-occlusal direction and the connecting arm (3) extending generally in a lingual-labial direction
- a locking element in form of a hook (7) arranged at the free end of the lingual arm (4), the hook (7) protruding in a lingual-labial direction
**characterized in that**
at least one cutout (9) is arranged at the free end of the lingual arm (4), the at least one cutout (9) being open at either the distal or the mesial side of the lingual arm (4).

2. The clip of claim 1, wherein the at least one cutout (9) has at least one mesial-distal border (911, 912) and at least one gingival-occlusal border (921, 922).

3. The clip of one of the preceding claims, wherein the hook (7), in a view along the lingual-labial direction, has a length (L) and is distanced from at least one mesial-distal border (911, 912) and from at least one gingival-occlusal border (921, 922) by at least half of its length (L).

4. The clip of one of the preceding claims, wherein the at least one cutout (9), in a view along the lingual-labial direction, is generally L-shaped.

5. The clip of one of the preceding claims, wherein the labial arm (2) is provided, preferably only, with a mesial finger (11) and a distal finger (10).

6. The clip of one of the preceding claims, wherein the hook (7) protrudes from a lingual surface of the lingual arm (4).

7. The clip of one of the preceding claims, wherein the clip (1) is provided with only one cutout (9) such that, in a view along the lingual-labial direction, the clip (1) is of asymmetric design due to the presence of the cutout (9).

8. The clip of one of the preceding claims, wherein the clip (1) has, at its labial arm (2) only a mesial finger (11) and a distal finger (10) between which there is arranged a wall running in the mesial-distal direction which is free of protrusions or fingers and which - preferably is running straight - and which together with the fingers (11, 10) which run in a gingival-occlusal direction borders an indentation arranged on the end of the labial arm (2).

9. The clip of one of claims 1 to 7, wherein the clip (310) has, at its labial arm (2) a mesial finger (321) and a distal finger (322) and two central fingers (323, 324) wherein the two central fingers (323, 324) are arranged adjacent to each other.

10. A self-ligating orthodontic bracket (12) comprising a clip (1) according to at least one of the preceding claims.

11. The bracket of the preceding claim, wherein the bracket (12) is provided with an occlusal-gingival channel (21) which has two sections of different clearance and which are separated from each other by a step (211) such that, in a position in which the archwire slot (22) is open, the hook (7) acts together with step (211) to prevent a separation of the clip (1) from the bracket (12).

12. An orthodontic bracket according to one of claims 10 or 11, comprising
- a base configured for attachment to a tooth surface;
- a bracket element attached to one side of the base, the bracket element comprising
• an arch wire slot formed in a labial side of the bracket element and running along a mesiodistal direction of the bracket element, said arch wire slot being configured for supporting an arch wire therein;
• a wall portion of the bracket element extending upward along one side of the arch wire slot, the wall portion having three indentations in a line parallel to the mesiodistal direction, forming outer indentations and a central indentation, the wall portion having two side walls separating the indentations from one another, each of the side walls having free ends configured with flanges that extend into the central and outer indentations parallel to a mesiodistal direction; and
• a channel running entirely through the bracket element underneath the arch wire slot and in a gingival-occlusal direction of the bracket;
**characterized in** a substantially U-shaped clip having a first end with two protrusions shaped to fit within the two outer indentations of the wall portion, and two central fingers shaped to fit within the central indentation of the wall portion, and a second end in the shape of a J and having a locking element at a tip thereof; wherein the clip is securable to the bracket by placing the second end through the channel and engaging the locking element and placing the protrusions and central fingers into the indentations of the bracket element, wherein the protrusions and central fingers are held in the indentations by the flanges, and wherein the clip is releasable by sliding the protrusions out of the indentations with a force sufficient to cause the protrusions and central fingers to clear the flanges to expose the arch wire slot.

13. The bracket according to claim 12, wherein the locking element is formed by a bend in the tip in a lingual direction of the bracket, wherein the channel is formed from two stepped sections, and wherein the locking element on the clip engages a wall of one of the sections to maintain the clip in the channel.

14. The bracket according to one of claim 11 or 13, wherein the fingers are constructed so as to diverge outward toward the adjacent side walls and engage a rear surface of the flanges on the adjacent side walls when the clip is in a locked position.

15. The bracket according to one of claims 11 to 14, wherein protrusions have ends that bend inward toward the adjacent side walls and engage a rear surface of the flanges on the adjacent side walls when the clip is in a locked position.

## Patentansprüche

1. Eine Ligaturklemme (1) für ein selbstligierendes kieferorthopädisches Bracket (12), umfassend:
- einen labialen Arm (2) mit einem freien Ende und einem weiteren Ende
- einen lingualen Arm (4) mit einem freien Ende und einem weiteren Ende
- einen Verbindungsarm (3), welcher mit den weiteren Enden
des Labialarms (2) und des Lingualarms (4) verbunden ist, wobei der Labialarm (2), der Verbindungsarm (3) und der Lingualarm (4) jeweils eine distale Seite und eine mesiale Seite aufweisen, wobei sich der Labialarm (2) und der Lingualarm (4) grundsätzlich in einer gingival-okklusalen Richtung erstrecken und sich der Verbindungsarm (3) grundsätzlich in einer lingual-labialen Richtung erstreckt
- ein Verriegelungselement in Form eines Hakens (7), welches am freien Ende des lingualen Arms (4) angeordnet ist, wobei der Haken (7) in einer lingual-labialen Richtung hervorsteht,
**dadurch gekennzeichnet, dass**
wenigstens eine Aussparung (9) am freien Ende des Lingualarms (4) angeordnet ist, wobei die wenigstens eine Aussparung (9) entweder an der distalen oder an der mesialen Seite des Lingualarms (4) offen ist.

2. Die Klemme nach Anspruch 1, wobei die wenigstens eine Aussparung (9) wenigstens eine mesial-distale Begrenzung (911, 912) und wenigstens eine gingival-okklusale Begrenzung (921, 922) aufweist.

3. Die Klemme nach einem der vorhergehenden Ansprüche, wobei der Haken (7) in einer Ansicht entlang der lingual-labialen Richtung eine Länge (L) aufweist, und von wenigstens einer mesial-distalen Begrenzung (911, 912) und von wenigstens einer gingivalen okklusalen Begrenzung (921, 922) um wenigstens die Hälfte seiner Länge (L) beabstandet ist.

4. Die Klemme nach einem der vorhergehenden Ansprüche, wobei die wenigstens eine Aussparung (9) in einer Ansicht entlang der lingual-labialen Richtung grundsätzlich L-förmig ist.

5. Die Klemme nach einem der vorhergehenden Ansprüche, wobei der labiale Arm (2), bevorzugt nur, mit einem mesialen Finger (11) und einem distalen Finger (10) vorgesehen ist.

6. Die Klemme nach einem der vorhergehenden Ansprüche, wobei der Haken (7) aus einer lingualen Oberfläche des lingualen Arms (4) hervorsteht.

7. Die Klemme nach einem der vorhergehenden Ansprüche, wobei die Klemme (1) mit nur einer Aussparung (9) vorgesehen ist, derart, dass die Klemme (1) in einer Ansicht entlang der lingual-labialen Richtung aufgrund des Vorhandenseins der Aussparung (9) asymmetrisch gestaltet ist.

8. Die Klemme nach einem der vorhergehenden Ansprüche, wobei die Klemme (1) an ihrem labialen Arm (2) nur einen mesialen Finger (11) und einen distalen Finger (10) hat, zwischen denen eine Wand angeordnet ist, welche in die mesial-distale Richtung verläuft und frei von Vorsprüngen oder Fingern ist und welche - vorzugsweise gerade verläuft - und welche zusammen mit den Fingern (11, 10), welche in eine gingival-okklusale Richtung verlaufen, an eine am Ende des labialen Arms (2) angeordnete Vertiefung angrenzen.

9. Die Klemme nach einem der Ansprüche 1 bis 7, wobei die Klemme (310) an ihrem labialen Arm (2) einen mesialen Finger (321) und einen distalen Finger (322) und zwei zentrale Finger (323, 324) hat, wobei die zwei zentralen Finger (323, 324) benachbart zueinander angeordnet sind.

10. Ein selbstligierendes kieferorthopädisches Bracket (12), umfassend eine Klemme (1) nach wenigstens einem der vorhergehenden Ansprüche.

11. Das Bracket nach dem vorhergehenden Anspruch, wobei das Bracket (12) mit einem okklusal-gingivalen Kanal (21) vorgesehen ist, welcher zwei Abschnitte mit unterschiedlichem Abstand aufweist, und welche voneinander durch eine Stufe (211) derart getrennt sind, dass der Haken (7) in einer Position, in welcher der Drahtbogenschlitz (22) offen ist, mit der Stufe (211) zur Verhinderung einer Trennung der Klemme (1) von dem Bracket (12) zusammenwirkt.

12. Das Bracket nach einem der Ansprüche 10 oder 11, umfassend:
- eine Basis, welche zur Befestigung an einer Zahnfläche ausgebildet ist,
- ein Bracketelement, welches an einer Seite der Basis angeordnet ist, umfassend
∘ einen Schlitz für einen Drahtbügel, welcher in einer labialen Seite des Bracketelements geformt ist und entlang einer mesiodistalen Richtung des Bracketelements verläuft und dazu ausgebildet ist, einen Drahtbogen darin zu halten;
∘ einen Wandabschnitt des Bracketelements, welcher sich nach oben entlang einer Seite des Schlitzes für einen Drahtbügel erstreckt, wobei der Wandabschnitt drei Vertiefungen in einer Linie parallel zu der mesiodistalen Richtung aufweist, welche äußere Vertiefungen und eine zentrale Vertiefung formen, wobei der Wandabschnitt zwei Seitenwände hat, welche die Vertiefungen voneinander trennen, wobei jeder der Seitenwände freie Enden hat, welche mit Flanschen, welche sich in die zentrale und die äußeren Vertiefungen parallel zu einer mesiodistalen Richtung erstrecken, ausgestaltet sind; und
∘ einem Kanal, welcher sich komplett durch das Bracketelement unterhalb des Schlitzes für den Drahtbügel und in eine gingival-okklusale Richtung des Brackets erstreckt;
**dadurch gekennzeichnet, dass** eine im Wesentlichen U-förmige Klemme vorgesehen ist, welche ein erstes Ende mit zwei Vorsprüngen, die so ausgeformt sind, dass sie in die zwei äußeren Vertiefungen des Wandabschnitts passen, und zwei zentrale Finger, die so ausgeformt sind, dass sie in die zentrale Vertiefung des Wandabschnitts passen, und ein zweites Ende in Form eines J, welches an einer Spitze ein Verschlusselement hat, aufweist; wobei die Klemme durch das Platzieren des zweiten Endes durch den Kanal und das Einrasten des Verschlusselements und Platzieren der Vorsprünge und zentralen Finger in den Ausnehmungen des Bracketelements an dem Bracket befestigbar ist, wobei die Vorsprünge und Finger durch die Flansche in den Vertiefungen gehalten werden, und wobei die Klemme durch das Herausschieben der Vorsprünge aus den Vertiefungen mit einer Kraft, welche ausreichend ist, dass die Vorsprünge und zentralen Finger die Flansche freigeben, um den Schlitz für den Drahtbügel freizulegen, lösbar ist.

13. Die Klemme nach Anspruch 12, wobei das Verschlusselement durch eine Biegung in eine linguale Richtung in der Spitze des Brackets ausgebildet ist, wobei der Kanal durch zwei abgestufte Abschnitte gebildet ist, und wobei das Verschlusselement an der Klemme einen der Abschnitte in Eingriff kommt, um die Klemme in dem Kanal zu halten.

14. Die Klemme nach einem der Ansprüche 13 oder 14, wobei die Finger so ausgestaltet sind, dass sie nach außen in Richtung der benachbarten Seitenwände auseinandergehen und eine Rückseite der Flansche an den benachbarten Seitenwänden kontaktieren, wenn die Klemme in einer geschlossenen Position ist.

15. Die Klemme nach einem der Ansprüche 11 bis 14, wobei Vorsprünge Enden haben, welche nach innen in Richtung der benachbarten Seitenwände gebogen sind und welche eine Rückseite der Flansche an den benachbarten Seitenwänden kontaktieren, wenn die Klemme in einer geschlossenen Position ist.

## Revendications

1. Pince de ligature (1) pour bracket orthodontique auto-ligaturant (12), comprenant :
- un bras labial (2) ayant une extrémité libre et une autre extrémité
- un bras lingual (4) ayant une extrémité libre et une autre extrémité
- un bras de raccordement (3) raccordé aux autres
extrémités du bras labial (2) et du bras lingual (4) le bras labial (2), le bras de raccordement (3) et le bras lingual (4) ayant chacun un côté distal et un côté mésial, le bras labial (2) et le bras lingual (4) s'étendant généralement dans une direction gingivale-occlusale et le bras de raccordement (3) s'étendant généralement dans une direction linguale-labiale
- un élément de verrouillage sous la forme d'un crochet (7) agencé au niveau de l'extrémité libre du bras lingual (4), le crochet (7) en saillie dans une direction linguale-labiale
**caractérisée en ce que**
au moins une découpe (9) est agencée au niveau de l'extrémité libre du bras lingual (4), l'au moins une découpe (9) étant ouverte au niveau du côté distal ou du côté mésial du bras lingual (4).

2. Pince selon la revendication 1, dans laquelle l'au moins une découpe (9) a au moins un bord mésial-distal (911, 912) et au moins un bord gingival-occlusal (921, 922).

3. Pince selon l'une des revendications précédentes, dans laquelle le crochet (7), dans une vue dans la direction linguale-labiale, a une longueur (L) et est espacé d'au moins un bord mésial-distal (911, 912) et d'au moins un bord gingival-occlusal (921, 922) d'au moins la moitié de sa longueur (L).

4. Pince selon l'une des revendications précédentes, dans laquelle l'au moins une découpe (9), dans une vue dans la direction linguale-labiale, est généralement en forme de L.

5. Pince selon l'une des revendications précédentes, dans laquelle le bras labial (2) est doté, de préférence uniquement, d'un doigt (11) mésial et d'un doigt (10) distal.

6. Pince selon l'une des revendications précédentes, dans laquelle le crochet (7) fait saillie d'une surface linguale du bras lingual (4).

7. Pince selon l'une des revendications précédentes, dans laquelle la pince (1) est dotée d'une seule découpe (9) de telle sorte que, dans une vue dans la direction linguale-labiale, la pince (1) est de conception asymétrique en raison de la présence de la découpe (9).

8. Pince selon l'une des revendications précédentes, dans laquelle la pince (1) a, au niveau de son bras labial (2) uniquement un doigt (11) mésial et un doigt (10) distal entre lesquels est agencée une paroi s'étendant dans la direction mésiale-distale qui est exempte de saillies ou de doigts et qui - de préférence s'étend en ligne droite - et qui conjointement aux doigts (11, 10) qui s'étendent dans une direction gingivale-occlusale borde une indentation agencée sur l'extrémité du bras labial (2).

9. Pince selon l'une des revendications 1 à 7, dans laquelle la pince (310) a, au niveau de son bras labial (2) un doigt mésial (321) et un doigt distal (322) et deux doigts centraux (323, 324) dans laquelle les deux doigts centraux (323, 324) sont agencés adjacents l'un à l'autre.

10. Bracket orthodontique auto-ligaturant (12) comprenant une pince (1) selon au moins l'une des revendications précédentes.

11. Bracket selon la revendication précédente, dans lequel le bracket (12) est doté d'un canal occlusal-gingival (21) qui a deux sections de jeu différent et qui sont séparées l'une de l'autre par un palier (211) de telle sorte que, dans une position dans laquelle la fente (22) pour arc dentaire est ouverte, le crochet (7) agit conjointement au palier (211) pour empêcher que la pince (1) se sépare du bracket (12).

12. Bracket orthodontique selon l'une des revendications 10 ou 11, comprenant
- une base configurée pour être fixée à une surface de dent ;
- un élément bracket fixé à un côté de la base, l'élément bracket comprenant
• une fente pour arc dentaire formée dans un côté labial de l'élément bracket et s'étendant dans une direction mésiodistale de l'élément bracket, ladite fente pour arc dentaire étant configurée pour supporter un arc dentaire dans celle-ci ;
• une partie paroi de l'élément bracket s'étendant vers le haut le long d'un côté de la fente pour arc dentaire, la partie paroi ayant trois indentations sur une ligne parallèle à la direction mésiodistale, formant des indentations extérieures et une indentation centrale, la partie paroi ayant deux parois latérales séparant les indentations les unes des autres, chacune des parois latérales ayant des extrémités libres configurées avec des brides qui s'étendent dans les indentations centrale et extérieures parallèlement à une direction mésiodistale ; et
• un canal s'étendant entièrement à travers l'élément bracket en dessous de la fente pour arc dentaire et dans une direction gingivale-occlusale du bracket ;
**caractérisé par** une pince sensiblement en forme de U ayant une première extrémité avec deux saillies formées pour s'insérer dans les deux indentations extérieures de la partie paroi, et deux doigts centraux formés pour s'insérer dans l'indentation centrale de la partie paroi, et une deuxième extrémité ayant la forme d'un J et ayant un élément de verrouillage à un bout de celle-ci ; dans lequel la pince peut être assemblée au bracket en plaçant la deuxième extrémité à travers le canal et en venant en prise avec l'élément de verrouillage et en plaçant les saillies et les doigts centraux dans les indentations de l'élément bracket, dans lequel les saillies et les doigts centraux sont tenus dans les indentations par les brides, et dans lequel la pince est libérable en faisant glisser les saillies hors des indentations avec une force suffisante pour amener les saillies et les doigts centraux à dégager les brides pour exposer la fente pour arc dentaire.

13. Bracket selon la revendication 12, dans lequel l'élément de verrouillage est formé par une courbure dans le bout dans une direction linguale du bracket, dans lequel le canal est formé à partir de deux sections de palier, et dans lequel l'élément de verrouillage sur la pince vient en prise avec une paroi de l'une des sections pour maintenir la pince dans le canal.

14. Bracket selon l'une des revendications 11 ou 13, dans lequel les doigts sont construits de manière à diverger vers l'extérieur vers les parois latérales adjacentes et venir en prise avec une surface arrière des brides sur les parois latérales adjacentes lorsque la pince est dans une position verrouillée.

15. Bracket selon l'une des revendications 11 à 14, dans lequel des saillies ont des extrémités qui se courbent vers l'intérieur vers les parois latérales adjacentes et viennent en prise avec une surface arrière des brides sur les parois latérales adjacentes lorsque la pince est dans une position verrouillée.
